(19) **Europäisches Patentamt / European Patent Office / Office européen des brevets**

(11) **EP 4 450 575 A1**

(12) # EUROPEAN PATENT APPLICATION
published in accordance with Art. 153(4) EPC

(43) Date of publication:
**23.10.2024 Bulletin 2024/43**

(21) Application number: **23746757.6**

(22) Date of filing: **17.01.2023**

(51) International Patent Classification (IPC):
**C09D 17/00** $^{(2006.01)}$    **C09C 1/48** $^{(2006.01)}$
**H01M 4/62** $^{(2006.01)}$

(52) Cooperative Patent Classification (CPC):
**C09C 1/48; C09D 17/00; H01M 4/62;** Y02E 60/10

(86) International application number:
**PCT/JP2023/001212**

(87) International publication number:
**WO 2023/145543 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.01.2022 JP 2022010824**

(71) Applicant: **Denka Company Limited**
**Tokyo 103-8338 (JP)**

(72) Inventors:
- **TANAKA Kosuke**
  **Tokyo 103-8338 (JP)**
- **HARADA Yusaku**
  **Tokyo 103-8338 (JP)**
- **HIRATA Kazuta**
  **Tokyo 103-8338 (JP)**

(74) Representative: **Mewburn Ellis LLP**
**Aurora Building**
**Counterslip**
**Bristol BS1 6BX (GB)**

(54) **CARBON BLACK, SLURRY AND LITHIUM ION SECONDARY BATTERY**

(57)    Carbon black in which, when aggregates are divided into first primary aggregates having an X value of more than 1.7, second primary aggregates having an X value of 1.7 or less and a Y value of 1.2 or less, third primary aggregates having an X value of 1.7 or less, a Y value of more than 1.2, and a Z value of 2.0 or less, and fourth primary aggregates having an X value of 1.7 or less, a Y value of more than 1.2, and a Z value of more than 2.0, the number percentage of a total number of the second primary aggregates and the third primary aggregates is 23% or more:

$$X=L/W \quad (X)$$

$$Y=P^2/4\pi A \quad (Y)$$

$$Z=(L\times W)/A \quad (Z)$$

[in the formula, in a two-dimensional projection image of a primary aggregate under a transmission electron microscope, the Feret's diameter of the primary aggregate in the minor axis direction is W ($\mu$m), the Feret's diameter in the major axis direction is L ($\mu$m), the perimeter is P ($\mu$m), and the projected area is A ($\mu$m$^2$)].

*Fig.2*

**Description**

**Technical Field**

The present invention relates to carbon black, a slurry and a lithium ion secondary battery.

**Background Art**

Lithium ion secondary batteries are widely used as power sources for small electronic devices such as smartphones and tablet computers. Lithium ion secondary batteries are generally composed of electrodes, separators, and electrolytic solutions. An electrode is produced by applying a mixture slurry in which an active material, a conductive agent, a binder and the like are dispersed in a dispersion medium onto a metal plate for a current collector and drying it to form a mixture layer.

As the conductive agent, for example, carbon black is used (for example, Patent Literature 1).

**Citation List**

**Patent Literature**

[Patent Literature 1] Japanese Unexamined Patent Publication No. 2014-193986

**Summary of Invention**

**Technical Problem**

A role of the conductive agent is to form a conductive path within the electrode. Therefore, if excessive aggregation occurs within the electrode, parts with poor conductivity appear locally, the active material is not effectively used, and the discharging capacity decreases, which results in deterioration of battery characteristics.

In recent years, there has been a demand for increasing the capacity of lithium ion secondary batteries, and there has been a tendency to increase the proportion of the active material in the mixture layer and decrease the proportion of the conductive agent and the binder. If the proportion of the conductive agent decreases, it becomes difficult to form a conductive path in the electrode, and battery characteristics deteriorate. Therefore, a study to improve conductivity by increasing the number of particles per unit mass using a conductive agent having a small particle size, reducing the distance between the conductive agent particles in the electrode, and increasing the number of contact points between the active material and the current collector has been performed. However, if the specific surface area increases as the particle size of the conductive agent decreases, since the viscosity of the mixture slurry increases significantly, uniform dispersion becomes difficult.

In order to achieve high dispersion of the conductive agent and reduce the viscosity of the mixture slurry, studies on performing dispersion by applying strong collision energy with a device such as a high pressure jet mill and extending a dispersion treatment time have been performed, but problems such as contamination with impurities due to wear of the device have been faced. In addition, addition of a dispersing agent has also been studied, but there have been problems that, if the amount of dispersing agent added increases as the particle size of the conductive agent decreases, battery characteristics deteriorate.

Here, an object of the present invention is to provide carbon black that has excellent dispersibility, can form a low-viscosity slurry, and can realize a lithium ion secondary battery having excellent discharging rate characteristics and cycle characteristics. In addition, an object of the present invention is to provide a slurry containing the carbon black and a lithium ion secondary battery containing the carbon black.

**Solution to Problem**

One aspect of the present invention relates to, for example, the following [1] to [6].

[1] Carbon black in which, when aggregates are divided into first primary aggregates having an X value of more than 1.7 determined by the following Formula (X),

second primary aggregates having an X value of 1.7 or less and a Y value of 1.2 or less determined by the following Formula (Y),
third primary aggregates having an X value of 1.7 or less, a Y value of more than 1.2, and a Z value of 2.0 or less determined by the following Formula (Z), and

fourth primary aggregates having an X value of 1.7 or less, a Y value of more than 1.2 and a Z value of more than 2.0,

a number percentage of a total number of the second primary aggregates and the third primary aggregates with respect to a total number of the first primary aggregates, the second primary aggregates, the third primary aggregates and the fourth primary aggregates is 23% or more:

$$X=L/W \qquad (X)$$

$$Y=P^2/4\pi A \qquad (Y)$$

$$Z=(L\times W)/A \qquad (Z)$$

[in the formula, in a two-dimensional projection image of a primary aggregate under a transmission electron microscope, the Feret's diameter of the primary aggregate in the minor axis direction is W ($\mu$m), the Feret's diameter of the primary aggregate in the major axis direction is L ($\mu$m), the perimeter of the primary aggregate is P ($\mu$m), and the projected area of the primary aggregate is A ($\mu$m$^2$)].

[2] The carbon black according to [1],
wherein the specific surface area is 150 m$^2$/g or more and 400 m$^2$/g or less.
[3] The carbon black according to [1] or [2],
wherein the DBP absorption is 165 mL/100 g or more and 285 mL/100 g or less.
[4] The carbon black according to any one of [1] to [3],
wherein the iron content is less than 2,000 ppb by mass.
[5] A slurry including the carbon black according to any one of [1] to [4] and a dispersion medium.
[6] A lithium ion secondary battery, including a positive electrode, a negative electrode, and a separator,
wherein at least one of the positive electrode and the negative electrode contains the carbon black according to any one of [1] to [4].

**Advantageous Effects of Invention**

According to the present invention, there is provided carbon black that has excellent dispersibility, can form a low-viscosity slurry, and can realize a lithium ion secondary battery having excellent discharging rate characteristics and cycle characteristics. In addition, according to the present invention, there are provided a slurry containing the carbon black and a lithium ion secondary battery containing the carbon black.

**Brief Description of Drawings**

FIG. 1 is a schematic view illustrating a two-dimensional projection image of a primary aggregate.
FIG. 2 is a diagram showing a two-dimensional projection image of primary aggregates of carbon black (A1) of Example A1 under a transmission electron microscope.

**Description of Embodiments**

Hereinafter, preferable embodiments of the present invention will be described in detail. Here, the present invention is not limited to the embodiments to be described below. In this specification, unless otherwise specified, when a numerical range is indicated using "to," this means a range of the left value "or more" and the right value "or less." For example, "A to B" means A or more and B or less.

<Carbon black>

Carbon black of the present embodiment is carbon black in which, when aggregates are divided into first primary aggregates having an X value of more than 1.7 determined by Formula (X), second primary aggregates having an X value of 1.7 or less and a Y value of 1.2 or less determined by Formula (Y), third primary aggregates having an X value of 1.7 or less, a Y value of more than 1.2, and a Z value of 2.0 or less determined by Formula (Z), and fourth primary aggregates having an X value of 1.7 or less, a Y value of more than 1.2, and a Z value of more than 2.0, a number percentage of a total number $(N_2+N_3)$ of the second primary aggregates and the third primary aggregates with respect to a total number $(N_1+N_2+N_3+N_4)$ of the first primary aggregates, the second primary aggregates, the third primary aggregates and the fourth primary aggregates is 23% or more:

$$X=L/W \qquad (X)$$

$$Y=P^2/4\pi A \qquad (Y)$$

$$Z=(L \times W)/A \qquad (Z)$$

In Formulae (X), (Y) and (Z), in a two-dimensional projection image of a primary aggregate under a transmission electron microscope, the Feret's diameter (minor diameter) of the primary aggregate in the minor axis direction is W ($\mu$m), the Feret's diameter (major diameter) of the primary aggregate in the major axis direction is L ($\mu$m), the perimeter of the primary aggregate is P ($\mu$m), and the projected area of the primary aggregate is A ($\mu$m$^2$).

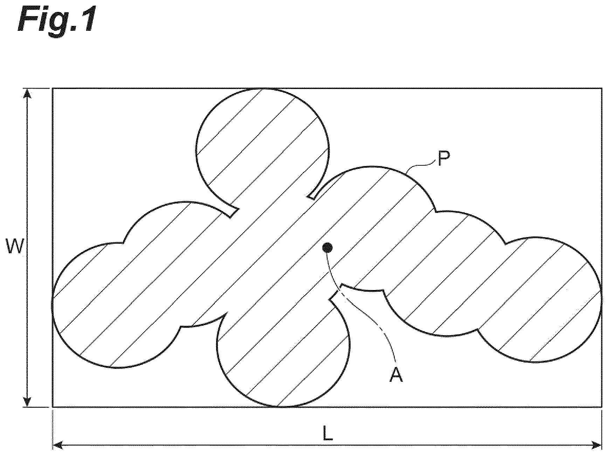

FIG. 1 is a schematic view illustrating a two-dimensional projection image of a primary aggregate. The width of the rectangle circumscribing the primary aggregate is W ($\mu$m), the length of the rectangle circumscribing the primary aggregate is L ($\mu$m), the perimeter of the primary aggregate is P ($\mu$m), and the projected area of the primary aggregate is A ($\mu$m$^2$).

The first primary aggregate is a primary aggregate having an X value of more than 1.7 determined by Formula (X). Here, the X value determined by Formula (X) indicates an aspect ratio of the primary aggregate, and the X value becomes larger as the difference between the major diameter and the minor diameter becomes larger. Since the first primary aggregate has an X value of more than 1.7, it can be said to be a primary aggregate having a shape similar to a linear shape.

The second primary aggregate is a primary aggregate having an X value of 1.7 or less determined by Formula (X) and a Y value of 1.2 or less determined by Formula (Y). Here, the Y value determined by Formula (Y) is an index of the complexity of the primary aggregate, and it can be said that, as the Y value becomes closer to 1, the shape becomes more similar to a perfect circle. Since the second primary aggregate has an X value of 1.7 or less and a Y value of 1.2 or less, it can be said to be a primary aggregate having a shape similar to a spheroid.

The third primary aggregate is a primary aggregate having an X value of 1.7 or less determined by Formula (X), a Y value of more than 1.2 determined by Formula (Y), and a Z value of 2.0 or less determined by Formula (Z). Here, the Z value determined by Formula (Z) is the ratio of the area (L$\times$W) of the rectangle circumscribing the projected view of the primary aggregate to the projected area (A) of the primary aggregate. The larger the Z value, the more branched the primary aggregated can be said to be. Since the third primary aggregate has an X value of 1.7 or less, a Y value of more than 1.2, and a Z value of 2.0 or less, it can be said to be a primary aggregate having a shape similar to a ellipsoid.

The fourth primary aggregate is a primary aggregate having an X value of 1.7 or less determined by Formula (X), a Y value of more than 1.2 determined by Formula (Y), and a Z value of more than 2.0 determined by Formula (Z). Since the fourth primary aggregate has an X value of 1.7 or less, a Y value of more than 1.2, and a Z value of more than 2.0, it can be said to be a primary aggregate having many branches.

According to the findings by the inventors, the second primary aggregate and the third primary aggregate having a shape similar to a spheroid or ellipsoid are less likely to cause an increase in the viscosity of the slurry due to entanglement of the primary aggregates compared to the first primary aggregate and the fourth primary aggregate. The carbon black of the present embodiment has excellent dispersibility and can form a low-viscosity slurry because the number percentage of the total number of the second primary aggregates and the third primary aggregates is 23% or more.

The first primary aggregate and the fourth primary aggregate are advantageous for forming a conductive path, and it is desirable that the first primary aggregate and the fourth primary aggregate be present in a predetermined amount or more in consideration of excellent performance as a conductive agent. Therefore, the number percentage of a total number $(N_2+N_3)$ of the second primary aggregates and the third primary aggregates with respect to a total number $(N_1+N_2+N_3+N_4)$ of the first primary aggregates, the second primary aggregates, the third primary aggregates and the fourth primary aggregates may be, for example, 50% or less, and is preferably 45% or less, more preferably 40% or less, and still more preferably 35% or less.

That is, the number percentage of a total number $(N_2+N_3)$ of the second primary aggregates and the third primary aggregates with respect to a total number $(N_1+N_2+N_3+N_4)$ of the first primary aggregates, the second primary aggregates, the third primary aggregates and the fourth primary aggregates may be, for example, 23 to 50%, 23 to 45%, 23 to 40% or 23 to 35%.

The number percentage $(N_1)$ of the first primary aggregates is not particularly limited, and may be, for example, 25% or more, 30% or more or 35% or more, with respect to a total number $(N_1+N_2+N_3+N_4)$ of the first primary aggregates, the second primary aggregates, the third primary aggregates and the fourth primary aggregates. In addition, the number percentage $(N_1)$ of the first primary aggregates with respect to a total number $(N_1+N_2+N_3+N_4)$ of the first primary aggregates, the second primary aggregates, the third primary aggregates and the fourth primary aggregates may be, for example, 70% or less, 65% or less or 60% or less.

That is, the number percentage $(N_1)$ of the first primary aggregates with respect to a total number $(N_1+N_2+N_3+N_4)$ of the first primary aggregates, the second primary aggregates, the third primary aggregates and the fourth primary aggregates may be, for example, 25 to 70%, 25 to 65%, 25 to 60%, 30 to 70%, 30 to 65%, 30 to 60%, 35 to 70%, 35 to 65% or 35 to 60%.

The number percentage $(N_2)$ of the second primary aggregates is not particularly limited and may be, for example, 1% or more, 2% or more or 3% or more with respect to a total number $(N_1+N_2+N_3+N_4)$ of the first primary aggregates, the second primary aggregates, the third primary aggregates and the fourth primary aggregates. In addition, the number percentage $(N_2)$ of the second primary aggregates with respect to a total number $(N_1+N_2+N_3+N_4)$ of the first primary aggregates, the second primary aggregates, the third primary aggregates and the fourth primary aggregates may be, for example, 20% or less, 10% or less or 8% or less.

That is, the number percentage $(N_2)$ of the second primary aggregates may be, for example, 1 to 20%, 1 to 10%, 1 to 8%, 2 to 20%, 2 to 10%, 2 to 8%, 3 to 20%, 3 to 10% or 3 to 8%, with respect to a total number $(N_1+N_2+N_3+N_4)$ of the first primary aggregates, the second primary aggregates, the third primary aggregates and the fourth primary aggregates.

The number percentage $(N_3)$ of the third primary aggregates is not particularly limited, and may be, for example, 5% or more, 10% or more or 15% or more with respect to a total number $(N_1+N_2+N_3+N_4)$ of the first primary aggregates, the second primary aggregates, the third primary aggregates and the fourth primary aggregates. In addition, the number percentage $(N_3)$ of the third primary aggregates may be, for example, 55% or less, 50% or less or 45% or less, with respect to a total number $(N_1+N_2+N_3+N_4)$ of the first primary aggregates, the second primary aggregates, the third primary aggregates and the fourth primary aggregates.

That is, the number percentage $(N_3)$ of the third primary aggregates with respect to a total number $(N_1+N_2+N_3+N_4)$ of the first primary aggregates, the second primary aggregates, the third primary aggregates and the fourth primary aggregates may be, for example, 5 to 55%, 5 to 50%, 5 to 45%, 10 to 55%, 10 to 50%, 10 to 45%, 15 to 55%, 15 to 50% or 15 to 45%.

The number percentage $(N_4)$ of the fourth primary aggregates is not particularly limited, and may be, for example, 5% or more, 10% or more or 15% or more with respect to a total number $(N_1+N_2+N_3+N_4)$ of the first primary aggregates, the second primary aggregates, the third primary aggregates and the fourth primary aggregates. In addition, the number percentage $(N_4)$ of the fourth primary aggregates with respect to a total number $(N_1+N_2+N_3+N_4)$ of the first primary aggregates, the second primary aggregates, the third primary aggregates and the fourth primary aggregates may be, for example, 45% or less, 40% or less or 35% or less.

That is, the number percentage $(N_4)$ of the fourth primary aggregates with respect to a total number $(N_1+N_2+N_3+N_4)$ of the first primary aggregates, the second primary aggregates, the third primary aggregates and the fourth primary aggregates is, for example, 5 to 45%, 5 to 40%, 5 to 35%, 10 to 45%, 10 to 40%, 10 to 35%, 15 to 45%, 15 to 40% or 15 to 35%.

Here, in this specification, capturing a two-dimensional projection image of the primary aggregate using a transmission electron microscope and image analysis can be performed by the following method.

First, carbon black is dispersed in chloroform at an ultrasonic output of 90 W for 10 minutes to loosen secondary aggregates into primary aggregates. These are scooped onto a collodion membrane mesh and imaged at an observation magnification of 2,000 using a transmission electron microscope.

Next, the Feret's diameter W $(\mu m)$ in the minor axis direction, the Feret's diameter L $(\mu m)$ in the major axis direction, the perimeter P $(\mu m)$, and the projected area A $(\mu m^2)$ of 100 or more randomly selected carbon black primary aggregates from the captured two-dimensional projection image are measured using image analysis software "Image-Pro Plus 6.2J (commercially available from Media Cybernetics)." Specifically, after the two-dimensional projection image is filtered (median filter, option $7 \times 7$, the number of times: 3), the luminance range is manually extracted according to the primary aggregate. "Size (width)," "size (length)," "the perimeter," and "area" are selected from the measurement items, and measurement is performed. Here, primary aggregates, scale bars, and background noise on the edges of the two-dimensional projection image are excluded during measurement.

In carbon black, the shapes of primary aggregates and the like vary greatly due to differences in thermal history during synthesis (for example, a thermal history caused by a thermal decomposition and combustion reaction of a fuel oil, a thermal decomposition and combustion reaction of raw materials, rapid cooling with cooling media, reaction termination, and the like), differences in collision frequency of primary particles and the like.

The specific surface area of the carbon black of the present embodiment may be, for example, 130 $m^2/g$ or more. In order to further improve the conductivity-imparting ability, the specific surface area of the carbon black is preferably 140 $m^2/g$ or more, more preferably 150 $m^2/g$ or more, and still more preferably 160 $m^2/g$ or more. The specific surface area of the carbon black can be increased by reducing the particle size of primary particles, making them hollow, and making the surface of particles porous.

In addition, the specific surface area of the carbon black of the present embodiment may be, for example, 500 $m^2/g$ or less. In order to further improve dispersibility, the specific surface area of the carbon black is preferably 450 $m^2/g$ or less, and more preferably 400 $m^2/g$ or less.

That is, the specific surface area of the carbon black may be, for example, 130 to 500 $m^2/g$, 130 to 450 $m^2/g$, 130 to 400 $m^2/g$, 140 to 500 $m^2/g$, 140 to 450 $m^2/g$, 140 to 400 $m^2/g$, 150 to 500 $m^2/g$, 150 to 450 $m^2/g$, 150 to 400 $m^2/g$, 160 to 500 $m^2/g$, 160 to 450 $m^2/g$ or 160 to 400 $m^2/g$.

Here, in this specification, the specific surface area is measured according to JIS K 6217-2:2017 Method A distribution method (thermal conductivity measurement method).

The DBP absorption of the carbon black of the present embodiment may be, for example, 150 mL/100 g or more, and is preferably 160 mL/100 g or more, more preferably 165 mL/100 g or more, and still more preferably 190 mL/100 g or more. In addition, the DBP absorption of the carbon black of the present embodiment is, for example, 300 mL/100 g or less, and more preferably 285 mL/100 g or less.

That is, the DBP absorption of the carbon black may be, for example, 150 to 300 mL/100 g, 150 to 285 mL/100 g, 160 to 300 mL/100 g, 160 to 285 mL/100 g, 165 to 300 mL/100 g, 165 to 285 mL/100 g, 190 to 300 mL/100 g or 190 to 285 mL/100 g.

The DBP absorption is an index for evaluating the ability to absorb dibutyl phthalate (DBP) on the surface of carbon black particles and in voids formed by the primary aggregates. In carbon black with developed primary aggregates, the DBP absorption increases because there are many neck parts formed by fusion of primary particles and voids formed between particles. If the DBP absorption is large, the conductivity-imparting ability within the electrode tends to increase due to the development of primary aggregates, and it also becomes easier to follow the volume change of the active material according to charging and discharging of lithium ion secondary batteries, and battery characteristics such as cycle characteristics tend to be further improved. In addition, if the DBP absorption is small, it is possible to avoid trapping of the binder in the mixture layer by carbon black primary aggregates, and it tends to be easier to maintain favorable adhesion with the active material and the current collector.

In this specification, the DBP absorption is a value obtained by converting the value measured by the method described in JIS K 6221 Method B into a value equivalent to JIS K 6217-4:2008 using the following Formula (a).

$$\text{DBP absorption} = (A - 10.974)/0.7833 \ \dots (a)$$

[in the formula, A indicates the value of the DBP absorption measured by the method described in JIS K 6221 Method B]

The average primary particle size of the carbon black of the present embodiment may be, for example, less than 35 nm, and is preferably less than 30 nm, and more preferably less than 25 nm. The average primary particle size of the carbon black of the present embodiment may be, for example, 1.0 nm or more.

Conventionally, if carbon black particles used as the conductive agent in the lithium ion secondary battery have a small average primary particle size (for example, less than 30 nm), it is difficult to form them into a slurry, but even if the carbon black particles of the present embodiment have a small average primary particle size (for example, less than 30 nm), it is possible to easily form a low-viscosity slurry. When carbon black particles with a small particle size can be used in this manner, even if the proportion in the mixture layer is low, high conductivity can be exhibited.

The average primary particle size of carbon black particles can be determined by measuring the primary particle sizes of 100 or more randomly selected carbon black particles from an image enlarged at a magnification of 50,000 under a transmission electron microscope (TEM) and calculating the average value thereof. The primary carbon black particles have a small aspect ratio and a shape similar to a true sphere, but the shape is not a perfect true sphere. Therefore, in the present embodiment, the largest size of line segments connecting two points on the outer periphery of primary particles in the TEM image is used as the primary particle size of carbon black particles.

The ash content of the carbon black of the present embodiment may be, for example, 0.05 mass% or less, and is preferably 0.03 mass% or less, and more preferably 0.02 mass% or less. The ash content can be measured according to JIS K 1469:2003, and can be reduced, for example, by classifying carbon black with a device such as a dry cyclone.

The iron content of the carbon black of the present embodiment may be, for example, less than 2,500 ppb by mass, and is preferably less than 2,300 ppb by mass, and more preferably less than 2,000 ppb by mass. The iron content can be reduced by, for example, bringing carbon black into contact with a magnet.

The iron content of carbon black can be measured through high frequency inductively coupled plasma mass spectrometry after a pretreatment in the acid decomposition method according to JIS K 0116:2014. Specifically, the iron content can be measured by the following method. First, 1 g of carbon black is accurately weighed out into a quartz beaker and heated in an atmospheric atmosphere in an electric furnace at 800°C×3 hr. Then, 10 mL of a mixed acid (70 mass% of hydrochloric acid and 30 mass% of nitric acid) and 10 mL or more of ultrapure water are added to the residue, and the sample is dissolved by heating on a hot plate at 200°C×1 hr. After cooling, the solution diluted and adjusted to 25 mL with ultrapure water is measured with a high-frequency inductively coupled plasma mass spectrometer (Agilent 8800 commercially available from Agilent).

If the ash content and iron content of carbon black are low, it is possible to more significantly minimize contamination with foreign matter such as metals and ceramics due to damage to a device and the like in a kneading treatment. In addition, it is possible to minimize a decrease in conductivity in the electrode due to contamination with the ash content, insulating foreign matter and the like. Therefore, carbon black having a low ash content and iron content can be suitably used for lithium ion secondary batteries for which high safety is required.

A method of producing carbon black of the present embodiment is not particularly limited, and for example, raw materials such as hydrocarbons are supplied from a nozzle installed in the upstream part of the reaction furnace, and carbon black can be produced according to a thermal decomposition reaction and/or combustion reaction and collected from a bag filter directly connected to the downstream part of the reaction furnace.

The raw materials to be used are not particularly limited, and gaseous hydrocarbons such as acetylene, methane, ethane, propane, ethylene, propylene, and butadiene and oily hydrocarbons such as toluene, benzene, xylene, gasoline, kerosene, light oil, and heavy oil can be used. Among these, it is preferable to use acetylene with few impurities. Since acetylene has a higher degree of thermal decomposition than other raw materials and can increase the temperature in the reaction furnace, carbon black nucleation dominates over particle growth according to an addition reaction, and the primary particle size of carbon black particles can be reduced.

In addition, it is preferable to supply oxygen, carbon dioxide, hydrogen, nitrogen, steam or the like to the reaction furnace separately from the raw materials as a carbon source. Since gases other than these raw materials promote gas stirring in the reaction furnace, and the frequency of collision and fusion between primary particles of carbon black generated from the raw materials increases, when a gas other than the raw materials is used, primary aggregates of carbon black are developed, and the DBP absorption tends to increase. As a gas other than the raw materials, it is preferable to use oxygen. When oxygen is used, some of the raw materials are combusted, the temperature in the reaction furnace increases, and it becomes easier to obtain carbon black with a small particle size and a large specific surface area. As a gas other than the raw materials, it is possible to use a plurality of gases. A gas other than the raw materials is preferably supplied to the upstream part of the reaction furnace, and preferably supplied from a nozzle separate from that of the raw materials. Accordingly, similarly, the raw materials supplied from the upstream part are efficiently stirred and primary aggregates are easily developed.

In addition, the inventors conducted extensive studies in order to control the shape of primary aggregates, and as a result, found that supplying a gas other than the raw materials into the reaction furnace in a direction perpendicular to the flow of the raw material gas is effective in producing the carbon black of the present embodiment. In this method, compared to a conventional case in which a raw material gas and a gas other than the raw materials are supplied in parallel, it is thought that a rotational action acts on the generated carbon black, and primary aggregates having a shape similar to a spheroid or ellipsoid are more likely to be formed than linear or branched primary aggregates. In addition, they also found that the ejection speed of the gas other than the raw materials into the reaction furnace influences the shape of primary aggregates.

In conventional carbon black production, a cooling medium such as water may be introduced from the downstream part of the reaction furnace in order to terminate a thermal decomposition and combustion reaction of raw materials, but the effect of primary aggregate development is not observed, and on the other hand, since there is a risk of characteristics varying greatly due to a rapid temperature change, it is preferable that no cooling medium be introduced from the downstream part of the reaction furnace in the present embodiment.

The carbon black of the present embodiment is not limited to carbon black that is directly obtained by production in the reaction furnace as described above, but can be obtained by, for example, crushing the obtained carbon black or mixing carbon black produced under different conditions.

<Slurry>

The slurry of the present embodiment contains the carbon black of the present embodiment and a dispersion medium.

If the viscosity of the slurry is too high, since strong shearing is applied during kneading with the active material, primary aggregates of carbon black may break, the conductivity may decrease, and contamination with foreign matter may occur due to wear of the device. On the other hand, if the viscosity of the slurry is too low, carbon black tends to precipitate in the slurry, and it may be difficult to maintain uniformity. In the present embodiment, since the viscosity of the slurry can be lowered due to use of the above carbon black, breakage of primary aggregates of carbon black is significantly minimized, an excellent conductivity-imparting ability can be maintained, and contamination with foreign matter due to wear of the device is significantly minimized. That is, in the present embodiment, the proportion of the active material in the mixture layer can be increased without impairing viscosity characteristics and conductivity of the slurry, and a high capacity of the lithium ion secondary battery can be achieved.

In order to obtain the above effect more significantly, the viscosity (25°C, a shear rate of 10 s$^{-1}$) of the slurry is preferably 100 mPa.s or more, and more preferably 200 mPa.s or more. Thereby, precipitation of carbon black is reduced and the uniformity of the slurry is improved. In addition, in order to obtain the above effect more significantly, the viscosity (25°C, a shear rate of 10 s$^{-1}$) of the slurry is preferably 1,500 mPa.s or less, and more preferably 1,200 mPa.s or less.

That is, the viscosity (25°C, a shear rate of 10 s$^{-1}$) of the slurry may be, for example, 100 to 1,500 mPa.s, 100 to 1,200 mPa.s, 200 to 1,500 mPa·s or 200 to 1,200 mPa. s.

The dispersion medium is not particularly limited, and for example, N-methyl-2-pyrrolidone, ethanol, ethyl acetate or the like can be used.

The slurry of the present embodiment may further contain other carbon blacks, graphite, carbon nanotubes, carbon nanofibers and the like as long as the conductivity-imparting ability and dispersibility of the carbon black of the present embodiment are not impaired.

The slurry of the present embodiment may further contain additives such as an active material and a dispersing agent.

In the slurry of the present embodiment, the content of the carbon black of the present embodiment may be, for example, 0.5 mass% or more and is preferably 1 mass% or more. In addition, in the slurry of the present embodiment, the content of the carbon black of the present embodiment may be, for example, 50 mass% or less and is preferably 20 mass% or less.

That is, in the slurry of the present embodiment, the content of the carbon black of the present embodiment may be, for example, 0.5 to 50 mass%, 0.5 to 20 mass%, 1 to 50 mass% or 1 to 20 mass%.

A method of producing a slurry of the present embodiment is not particularly limited, and for example, it is possible to produce a slurry by kneading respective components using a general device such as a mixer, a kneader, a disperser, a mill, an automatic revolution type rotating device or the like.

The slurry of the present embodiment can be suitably used as an electrode-forming slurry for forming an electrode of a lithium ion secondary battery. The electrode-forming slurry may be a positive electrode-forming slurry or a negative electrode-forming slurry.

When the slurry of the present embodiment is an electrode-forming slurry, the slurry of the present embodiment may contain an active material, a conductive agent and a dispersion medium, and in this case, the slurry contains the carbon black of the present embodiment as a conductive agent.

The content of the conductive agent in the electrode-forming slurry may be, for example, 0.01 mass% or more, and is preferably 0.05 mass% or more, and more preferably 0.08 mass% or more. In addition, the content of the conductive agent in the electrode-forming slurry may be, for example, 20 mass% or less, and is preferably 15 mass% or less and more preferably 10 mass% or less.

That is, the content of the conductive agent in the electrode-forming slurry may be, for example, 0.01 to 20 mass%, 0.01 to 15 mass%, 0.01 to 10 mass%, 0.05 to 20 mass%, 0.05 to 15 mass%, 0.05 to 10 mass%, 0.08 to 20 mass%, 0.08 to 15 mass% or 0.08 to 10 mass%.

The electrode-forming slurry may further contain a conductive agent other than carbon black. Examples of conductive agents other than carbon black include graphite, carbon nanotubes, and carbon nanofibers.

In the electrode-forming slurry, the proportion of carbon black in the conductive agent may be, for example, 50 mass% or more, and is preferably 70 mass% or more, more preferably 90 mass% or more, and may be 100 mass%.

The active material is not particularly limited, and known active materials used in lithium ion secondary batteries can be used without particular limitation. Examples of positive electrode active materials include lithium cobaltate, lithium nickelate, lithium manganate, nickel/manganese/lithium cobaltate, and lithium iron phosphate. Examples of negative electrode active materials include carbonaceous materials such as natural graphite, artificial graphite, graphite, activated carbon, coke, needle coke, fluid coke, mesophase microbeads, carbon fibers, and pyrolytic carbon.

The electrode-forming slurry may further contain a binder. The binder is not particularly limited, and known binders used in lithium ion secondary batteries can be used without particular limitation. Examples of binders include polyethylene, nitrile rubber, polybutadiene, butyl rubber, polystyrene, styrene butadiene rubber, polysulfide rubber, nitrocellulose, carboxymethyl cellulose, polyvinyl alcohol, tetrafluoroethylene resins, polyvinylidene fluoride, and polychloroprene fluoride.

A method of forming an electrode using an electrode-forming slurry is not particularly limited, and for example, an electrode-forming slurry is applied onto a current collector and dried, and thus an electrode containing a current collector and a mixture layer can be formed.

The current collector is not particularly limited, and for example, metal foils formed of gold, silver, copper, platinum, aluminum, iron, nickel, chromium, manganese, lead, tungsten, titanium, or alloys mainly composed of these are used. For example, an aluminum foil is preferably used for the positive electrode current collector, and a copper foil is preferably used for the negative electrode current collector.

<Lithium ion secondary battery>

The lithium ion secondary battery of the present embodiment includes a positive electrode, a negative electrode and a separator. In addition, in the lithium ion secondary battery of the present embodiment, at least one of the positive electrode and the negative electrode contains the above carbon black of the present embodiment. In the lithium ion secondary battery of the present embodiment, at least one of the positive electrode and the negative electrode may be formed from the above electrode-forming slurry, and at least one of the positive electrode and the negative electrode may include a mixture layer formed on the current collector from the above electrode-forming slurry.

The lithium ion secondary battery of the present embodiment has a high capacity because the carbon black of the present embodiment is used, and can be produced using the above electrode-forming slurry with favorable productivity.

In the lithium ion secondary battery of the present embodiment, the positive electrode preferably contains the above carbon black of the present embodiment. In addition, in the lithium ion secondary battery of the present embodiment, the positive electrode is preferably formed from the above electrode-forming slurry, and the positive electrode more preferably includes a mixture layer formed on the current collector from the above electrode-forming slurry.

In the lithium ion secondary battery of the present embodiment, the configuration other than the electrode containing the carbon black of the present embodiment may be the same as that of a known lithium ion secondary battery.

The separator is not particularly limited, and separators known as separators for lithium ion secondary batteries can be used without particular limitation. Examples of separators include synthetic resins such as polyethylene and polypropylene. The separator is preferably a porous film because it retains the electrolytic solution well.

The lithium ion secondary battery of the present embodiment may include an electrode group in which positive electrodes and negative electrodes are laminated or wound with separators therebetween.

In the lithium ion secondary battery of the present embodiment, a positive electrode, a negative electrode and a separator may be immersed in the electrolytic solution.

The electrolytic solution is not particularly limited, and may be, for example, a non-aqueous electrolytic solution containing a lithium salt. Examples of non-aqueous solvents in the non-aqueous electrolytic solution containing a lithium salt include ethylene carbonate, propylene carbonate, diethyl carbonate, dimethyl carbonate, and methyl ethyl carbonate. In addition, examples of lithium salts that can be dissolved in the non-aqueous solvent include lithium hexafluorophosphate, lithium borotetrafluoride, and lithium trifluoromethanesulfonate.

In the lithium ion secondary battery of the present embodiment, an ion conducting polymer or the like may be used as an electrolyte.

While preferable embodiments of the present invention have been described above, the present invention is not limited to the above embodiments.

For example, one aspect of the present invention may be a method of evaluating carbon black including an image acquisition process in which a two-dimensional projection image of primary aggregates of carbon black is acquired using a transmission electron microscope and an evaluating process in which the numbers of first primary aggregates, second primary aggregates, third primary aggregates and fourth primary aggregates are determined from the two-dimensional projection image, and the number percentage of a total number of the second primary aggregates and the third primary aggregates with respect to a total number of the first primary aggregates, the second primary aggregates, the third primary aggregates and the fourth primary aggregates is determined.

In addition, one aspect of the present invention may be a method of selecting carbon black including an image acquisition process in which a two-dimensional projection image of primary aggregates of carbon black is acquired using a transmission electron microscope and a selecting process in which the numbers of first primary aggregates, second primary aggregates, third primary aggregates and fourth primary aggregates are determined from the two-dimensional projection image, the number percentage of a total number of the second primary aggregates and the third primary aggregates with respect to a total number of the first primary aggregates, the second primary aggregates, the third primary aggregates and the fourth primary aggregates is determined, and carbon black having a number percentage of 23% or more is selected.

[Examples]

(Example A1: production of carbon black (A1))

Carbon black was produced by supplying acetylene (110°C) at 20 Nm$^3$/h as a raw material gas from a nozzle installed in the upstream part of a columnar reaction furnace (with a diameter of 1 m and a length of 7 m) and oxygen (25°C) at 8 Nm$^3$/h as a gas other than the raw materials from a nozzle installed in a direction perpendicular to the raw material gas, and performing collection through a bag filter installed in the downstream part of the reaction furnace. Then, the sample was passed through a dry cyclone device and an iron removal magnet and collected in a tank. Here, the nozzle diameter was adjusted so that the ejection speed of the raw material gas into the reaction furnace was 5 m/s and the ejection speed of the gas other than the raw materials was 15 m/s.

(Example A2: production of carbon black (A2))

Carbon black was produced in the same manner as in Example 1 except that carbon dioxide (25°C) was supplied as a gas other than the raw materials at an ejection speed of 15 m/s and 14 Nm$^3$/h.

(Example A3: production of carbon black (A3))

Carbon black was produced in the same manner as in Example 1 except that ethylene (110°C) was supplied as a raw material gas at an ejection speed of 5 m/s and 20 Nm$^3$/h.

(Examples A4 to A12: production of carbon black (A4) to (A12))

Carbon black was produced in the same manner as in Example 1 except that oxygen (25°C) was supplied as a gas other than the raw materials at a supply amount and an ejection speed shown in Table 1.

(Comparative Examples X1 to X3, and X5: production of carbon black (X1) to (X3), and (X5))

Carbon black was produced in the same manner as in Example 1 except that oxygen (25°C) was supplied as a gas other than the raw materials at a supply amount and an ejection speed shown in Table 1.

(Comparative Example X4: production of carbon black (X4))

Carbon black was produced in the same manner as in Example 10 except that oxygen (25°C) was supplied as a gas other than the raw materials in parallel with a raw material gas.

[Table 1]

| | Raw material gas | Gas other than raw material | Supply amount of gas other than raw material (Nm$^3$/h) | Ejection speed of gas other than raw material (m/s) |
|---|---|---|---|---|
| Example 1 | acetylene | oxygen | 8 | 15 |
| Example 2 | acetylene | carbon dioxide | 14 | 15 |
| Example 3 | ethylene | oxygen | 8 | 15 |
| Example 4 | acetylene | oxygen | 9.5 | 15 |
| Example 5 | acetylene | oxygen | 9.5 | 10 |
| Example 6 | acetylene | oxygen | 12 | 30 |
| Example 7 | acetylene | oxygen | 12 | 25 |
| Example 8 | acetylene | oxygen | 12 | 20 |
| Example 9 | acetylene | oxygen | 12 | 15 |
| Example 10 | acetylene | oxygen | 12 | 8 |

(continued)

|  | Raw material gas | Gas other than raw material | Supply amount of gas other than raw material (Nm³/h) | Ejection speed of gas other than raw material (m/s) |
|---|---|---|---|---|
| Example 11 | acetylene | oxygen | 16 | 7 |
| Example 12 | acetylene | oxygen | 16 | 8 |
| Comparative Example 1 | acetylene | oxygen | 8 | 10 |
| Comparative Example 2 | acetylene | oxygen | 9.5 | 8 |
| Comparative Example 3 | acetylene | oxygen | 12 | 7 |
| Comparative Example 4 | acetylene | oxygen | 12 | 8 (parallel) |
| Comparative Example 5 | acetylene | oxygen | 16 | 6 |

The carbon black samples obtained in the examples and comparative examples were subjected to the following measurements. Here, the average primary particle size of the carbon black particles obtained in each example was 1.0 nm or more and less than 25 nm.

(1) Specific surface area

The specific surface area was measured according to JIS K 6217-2:2017 Method A distribution method (thermal conductivity measurement method).

(2) DBP absorption

DBP absorption: obtained by converting a value measured by the method described in JIS K 6221 Method B into a value equivalent to JIS K 6217-4:2008 using Formula (a).

(3) Iron content

The iron content was measured through high frequency inductively coupled plasma mass spectrometry after a pretreatment in the acid decomposition method according to JIS K 0116:2014.

Next, carbon black samples obtained in the examples and comparative examples were dispersed in chloroform at an ultrasonic output of 90 W for 10 minutes to loosen secondary aggregates into primary aggregates, and these were scooped onto a collodion membrane mesh and imaged at an observation magnification of 2,000 using a transmission electron microscope.

After the obtained two-dimensional projection image was filtered (median filter, option $7\times7$, the number of times: 3) using image analysis software "Image-Pro Plus 6.2J" (commercially available from Media Cybernetics), the luminance range was manually extracted according to the primary aggregate. "Size (width)," "size (length)," "the perimeter," and "area" were selected from the measurement items, and the Feret's diameter W ($\mu$m) in the minor axis direction, the Feret's diameter L ($\mu$m) in the major axis direction, the perimeter P ($\mu$m), and the projected area A ($\mu$m$^2$) of 100 or more randomly selected primary aggregates were measured. Primary aggregates, scale bars, and background noise on the edges of the image were excluded. Based on Formula (X), Formula (Y) and Formula (Z), the primary aggregates were divided into first primary aggregates, second primary aggregates, third primary aggregates and fourth primary aggregates, and their number percentages were calculated. The results are shown in Table 2.

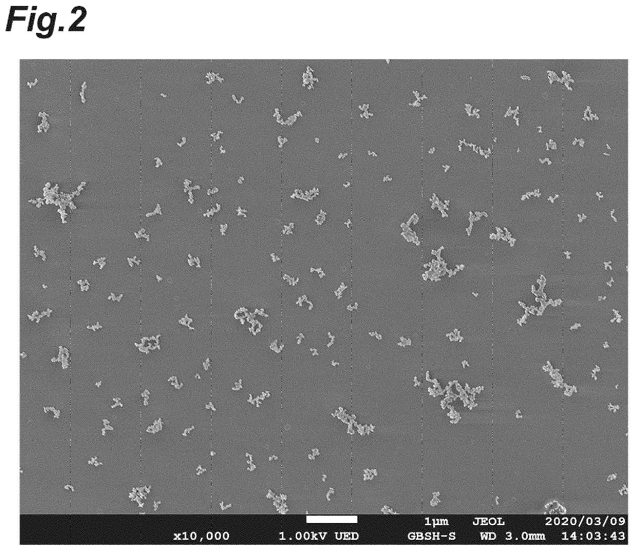

Here, FIG. 2 is a diagram showing a two-dimensional projection image of primary aggregates of carbon black (A1) of Example A1 under a transmission electron microscope.

[Table 2]

| | $N_1$ (%) | $N_2$ (%) | $N_3$ (%) | N4 (%) | $N_2+N_3$ (%) | Specific surface area (m²/g) | DBP absorption (mL/100 g) | Iron content (ppb by mass) |
|---|---|---|---|---|---|---|---|---|
| Example A1 | 44.4 | 3.4 | 26.3 | 25.9 | 29.7 | 154 | 184 | 1190 |
| Example A2 | 51.1 | 4.9 | 18.4 | 25.6 | 23.3 | 152 | 182 | 1280 |
| Example A3 | 50.5 | 5.3 | 18.8 | 25.4 | 24.1 | 152 | 167 | 1210 |
| Example A4 | 41.5 | 5.5 | 28.0 | 25.0 | 33.5 | 178 | 198 | 1370 |
| Example A5 | 49.3 | 3.7 | 20.0 | 27.0 | 23.7 | 174 | 200 | 1430 |
| Example A6 | 28.0 | 7.8 | 42.5 | 21.7 | 50.3 | 237 | 205 | 1500 |
| Example A7 | 32.2 | 6.5 | 38.9 | 22.4 | 45.4 | 245 | 217 | 1620 |
| Example A8 | 37.1 | 5.0 | 34.7 | 23.2 | 39.7 | 236 | 207 | 1490 |
| Example A9 | 39.4 | 4.4 | 30.5 | 25.7 | 34.9 | 248 | 220 | 1690 |
| Example A10 | 50.9 | 3.9 | 19.3 | 25.9 | 23.2 | 242 | 208 | 1550 |
| Example A11 | 50.0 | 4.5 | 19.5 | 26.0 | 24.0 | 376 | 260 | 1870 |
| Example A12 | 48.8 | 4.4 | 19.9 | 26.9 | 24.3 | 385 | 279 | 1900 |
| Comparative Example X1 | 52.0 | 4.6 | 17.8 | 25.6 | 22.4 | 153 | 185 | 1250 |
| Comparative Example X2 | 50.6 | 3.4 | 19.2 | 26.8 | 22.6 | 174 | 205 | 1470 |
| Comparative Example X3 | 52.0 | 3.3 | 19.0 | 25.7 | 22.3 | 242 | 209 | 1520 |
| Comparative Example X4 | 46.9 | 2.2 | 16.9 | 34.0 | 19.1 | 245 | 232 | 1570 |
| Comparative Example X5 | 49.0 | 3.6 | 18.9 | 28.5 | 22.5 | 380 | 265 | 1900 |

(Example B1: preparation of slurry (B1))

3 parts by mass of carbon black (A1) and 97 parts by mass of N-methyl-2-pyrrolidone (commercially available from Kanto Chemical Co., Inc.) as a dispersion medium were kneaded using a rotation/revolution mixer ("Thinky Mixer ARV-310" commercially available from Thinky Corporation) at a rotational speed of 1,800 rpm for 40 minutes to produce a carbon black slurry. The viscosity of this slurry at 25°C was evaluated using a viscoelasticity measuring machine ("MCR102," commercially available from AntonPaar, using a cone plate with φ30 mm and an angle of 3°, a gap of 1 mm). Measurement was performed by changing the shear rate from 0.01 s⁻¹ to 100 s⁻¹, and the viscosity at a shear rate of 10 s⁻¹ was obtained. The results are shown in Table 3.

(Examples B2 to B12: preparation of slurries (B2) to (B12))

Slurries were prepared in the same manner as in Example B1 except that carbon black (A2) to (A12) were used in place of the carbon black (A1), and the viscosity thereof was obtained. The results are shown in Table 3.

(Comparative Examples Y1 to Y5: preparation of slurries (Y1) to (Y5))

Slurries were prepared in the same manner as in Example B1 except that carbon black (X1) to (X5) were used in place of the carbon black (A1), and the viscosity thereof was obtained. The results are shown in Table 3.

[Table 3]

|  | Slurry viscosity (mPa·s) |
| --- | --- |
| Example B1 | 300 |
| Example B2 | 330 |
| Example B3 | 270 |
| Example B4 | 530 |
| Example B5 | 870 |
| Example B6 | 760 |
| Example B7 | 790 |
| Example B8 | 880 |
| Example B9 | 950 |
| Example B10 | 1080 |
| Example B11 | 1060 |
| Example B12 | 1170 |
| Comparative Example Y1 | 570 |
| Comparative Example Y2 | 1550 |
| Comparative Example Y3 | 1810 |
| Comparative Example Y4 | 2330 |
| Comparative Example Y5 | 3140 |

As shown in Table 3, the slurries of the examples had lower viscosities than the slurries of the comparative examples using carbon black having similar specific surface areas. Based on the results, it was confirmed that the carbon black of the present invention had excellent dispersibility and could form a low-viscosity slurry.

(Example C1: production of battery (C1))

40 parts by mass (1.2 parts by mass of carbon black, and 38.8 parts by mass of N-methyl-2-pyrrolidone) of the slurry (B1), 96.8 parts by mass of $LiNi_{0.5}Mn_{0.3}Co_{0.2}O_2$ ("TX10" commercially available from Umicore) as a positive electrode active material, 2 parts by mass of polyvinylidene fluoride ("HSV900" commercially available from Arkema) as a binder, 0.1 parts by mass of polyvinyl alcohol ("B05" commercially available from Denka Co., Ltd.) as a dispersing agent, and 10 parts by mass of N-methyl-2-pyrrolidone (commercially available from Kanto Chemical Co., Inc.) as a dispersion medium were kneaded using a rotation/revolution mixer ("Thinky Mixer ARV-310" commercially available from Thinky Corporation) at a rotational speed of 2,000 rpm for 10 minutes to produce a positive electrode-forming mixture slurry. The obtained positive electrode-forming mixture slurry was applied onto an aluminum foil with a thickness of 15 $\mu$m (commercially available from UACJ) with an applicator, and dried at 105°C for 1 hour in advance. Next, the sample was pressed with a roll press machine at a line pressure of 200 kg/cm, and the sum of the thicknesses of the aluminum foil and the coating film was adjusted to 80 $\mu$m. In order to remove volatile components, vacuum-drying was performed at 170°C for 3 hours to produce a positive electrode.

97 parts by mass of artificial graphite ("MAG-D" commercially available from Hitachi Chemical Company) as a negative electrode active material, 2 parts by mass of styrene butadiene rubber ("BM-400B" commercially available from Zeon Corporation) as a binder, and 1 part by mass of carboxymethyl cellulose ("D2200" commercially available from Daicel Corporation) as a dispersing agent were weighed out, pure water was added thereto, and mixing was performed using a rotation/revolution mixer (Thinky Mixer ARV-310 commercially available from Thinky Corporation) to produce a negative electrode-forming mixture slurry. The obtained negative electrode-forming mixture slurry was applied onto a copper foil with a thickness of 10 $\mu$m (commercially available from UACJ) with an applicator, and dried at 60°C for 1 hour. Next, the sample was pressed with a roll press machine at a line pressure of 100 kg/cm, and the sum of the thicknesses of the copper foil and the coating film was adjusted to 40 $\mu$m. In order to completely remove water, vacuum-drying was performed at 120°C for 3 hours to produce a negative electrode.

The positive electrode was processed to 40×40 mm, the negative electrode was processed to 44×44 mm, and a polyolefin microporous membrane as a separator was disposed between both electrodes to produce a battery. An electrolytic solution obtained by dissolving 1 mol/L of lithium hexafluorophosphate (commercially available from Stella Chemifa Corporation) in a solution in which ethylene carbonate (commercially available from Aldrich)/dimethyl carbonate (commercially available from Aldrich) were mixed at a volume ratio of 1/1 was used.

As a battery discharge test, the produced battery was charged with a constant current and constant voltage limited to 4.35 V and 0.2C at 25°C and then discharged to 3.0 V at a constant current of 0.2C. Next, the discharge current was changed to 0.2C, 0.5C, 1C, 2C, and 3C, and a discharging capacity for each discharge current was measured. The capacity retention rate during 3C discharge relative to 0.2C discharge was calculated, and evaluated as a discharge rate characteristic. In addition, the produced battery was charged with a constant current and constant voltage limited to 4.35 V and 1C at 25°C and then discharged to 3.0 V at a constant current of 1C. Next, the charging and discharging were repeated 500 cycles, and the discharging capacity was measured. The capacity retention rate during discharge for 500 cycles relative to discharge for 1 cycle was calculated and evaluated as a cycle characteristic. The results are shown in Table 4.

(Examples C2 to C12: production of batteries (C2) to (C12))

Batteries were produced in the same manner as in Example C1 except that slurries (B2) to (B12) were used in place of the slurry (B1) and evaluated. The results are shown in Table 4.

(Examples Z1 to Z5: production of batteries (Z1) to (Z5))

Batteries were produced in the same manner as in Example C1 except that slurries (Y1) to (Y5) were used in place of the slurry (B1), and evaluated. The results are shown in Table 4.

[Table 4]

|  | Discharge rate characteristic (%) | Cycle characteristic (%) |
|---|---|---|
| Example C1 | 76 | 77 |
| Example C2 | 75 | 76 |
| Example C3 | 73 | 75 |
| Example C4 | 80 | 80 |
| Example C5 | 78 | 79 |
| Example C6 | 81 | 81 |
| Example C7 | 82 | 81 |
| Example C8 | 83 | 82 |
| Example C9 | 85 | 83 |
| Example C10 | 85 | 85 |
| Example C11 | 90 | 84 |
| Example C12 | 91 | 86 |
| Comparative Example Z1 | 59 | 64 |
| Comparative Example Z2 | 64 | 69 |
| Comparative Example Z3 | 69 | 72 |
| Comparative Example Z4 | 65 | 65 |
| Comparative Example Z5 | 68 | 70 |

**Claims**

1. Carbon black in which, when aggregates are divided into first primary aggregates having an X value of more than 1.7 determined by the following Formula (X),

second primary aggregates having an X value of 1.7 or less and a Y value of 1.2 or less determined by the following Formula (Y),
third primary aggregates having an X value of 1.7 or less, a Y value of more than 1.2, and a Z value of 2.0 or less determined by the following Formula (Z), and
fourth primary aggregates having an X value of 1.7 or less, a Y value of more than 1.2 and a Z value of more than 2.0,
a number percentage of a total number of the second primary aggregates and the third primary aggregates with respect to a total number of the first primary aggregates, the second primary aggregates, the third primary aggregates and the fourth primary aggregates is 23% or more:

$$X=L/W \qquad (X)$$

$$Y=P^2/4\pi A \qquad (Y)$$

$$Z=(L \times W)/A \qquad (Z)$$

[in the formula, in a two-dimensional projection image of a primary aggregate under a transmission electron microscope, the Feret's diameter of the primary aggregate in the minor axis direction is W ($\mu$m), the Feret's diameter of the primary aggregate in the major axis direction is L ($\mu$m), the perimeter of the primary aggregate is P ($\mu$m), and the projected area of the primary aggregate is A ($\mu$m$^2$)].

2. The carbon black according to claim 1,
   wherein the specific surface area is 150 m$^2$/g or more and 400 m$^2$/g or less.

3. The carbon black according to claim 1,
   wherein the DBP absorption is 165 mL/100 g or more and 285 mL/100 g or less.

4. The carbon black according to claim 1,
   wherein the iron content is less than 2,000 ppb by mass.

5. A slurry comprising the carbon black according to any one of claims 1 to 4 and a dispersion medium.

6. A lithium ion secondary battery, comprising a positive electrode, a negative electrode, and a separator,
   wherein at least one of the positive electrode and the negative electrode contains the carbon black according to any one of claims 1 to 4.

**Fig.1**

Fig.2

## INTERNATIONAL SEARCH REPORT

| International application No. |
| --- |
| **PCT/JP2023/001212** |

**A. CLASSIFICATION OF SUBJECT MATTER**

*C09D 17/00*(2006.01)i; *C09C 1/48*(2006.01)i; *H01M 4/62*(2006.01)i
FI:  C09C1/48; C09D17/00; H01M4/62 Z

According to International Patent Classification (IPC) or to both national classification and IPC

**B. FIELDS SEARCHED**

Minimum documentation searched (classification system followed by classification symbols)

C09D17/00; C09C1/48; H01M4/62

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2012-158627 A (NIPPON STEEL CHEMICAL CARBON CO., LTD.) 23 August 2012 (2012-08-23)<br>claims | 1-6 |
| A | JP 2012-158662 A (THE YOKOHAMA RUBBER CO., LTD.) 23 August 2012 (2012-08-23)<br>claims | 1-6 |
| A | JP 2000-313821 A (MITSUBISHI CHEMICAL CORP.) 14 November 2000 (2000-11-14)<br>claims | 1-6 |
| A | JP 56-100862 A (DENKI KAGAKU KOGYO KK) 13 August 1981 (1981-08-13)<br>claims | 1-6 |
| A | JP 2013-209504 A (DENKI KAGAKU KOGYO KK) 10 October 2013 (2013-10-10)<br>claims | 1-6 |
| A | US 2021/0017025 A1 (MONOLITH MATERIALS, INC.) 21 January 2021 (2021-01-21)<br>claims | 1-6 |

☐ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 March 2023** | **14 March 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/001212**

| Patent document cited in search report | | | Publication date (day/month/year) | Patent family member(s) | | | Publication date (day/month/year) |
|---|---|---|---|---|---|---|---|
| JP | 2012-158627 | A | 23 August 2012 | (Family: none) | | | |
| JP | 2012-158662 | A | 23 August 2012 | (Family: none) | | | |
| JP | 2000-313821 | A | 14 November 2000 | (Family: none) | | | |
| JP | 56-100862 | A | 13 August 1981 | GB claims | 2066228 | A | |
| JP | 2013-209504 | A | 10 October 2013 | (Family: none) | | | |
| US | 2021/0017025 | A1 | 21 January 2021 | WO | 2019/046320 | A1 | |
| | | | | EP | 3676220 | A1 | |
| | | | | CN | 111278767 | A | |
| | | | | CA | 3074220 | A | |
| | | | | MX | 2020002215 | A | |

Form PCT/ISA/210 (patent family annex) (January 2015)

**EP 4 450 575 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014193986 A